# EUROPÄISCHE PATENTSCHRIFT

(11) **EP 2 969 895 B1**
(45) Veröffentlichungstag und Bekanntmachung des Hinweises auf die Patenterteilung: **29.03.2017**
(21) Anmeldenummer: 14705710.3
(22) Anmeldetag: 14.02.2014
(51) Int. Cl.: B67C 3/22, F16J 15/46

(54) **MEDIENDREHVERTEILER FÜR GEFÄSSFÜLLMASCHINEN**
ROTARY DISTRIBUTOR FOR FILLING MACHINES
DISTRIBUTEUR ROTATIF POUR MACHINE DE REMPLISSSAGE

(30) Priorität: 14.03.2013 DE 102013102594
(43) Veröffentlichungstag der Anmeldung: 20.01.2016
(73) Patentinhaber: KHS GmbH, 44143 Dortmund (DE)
(72) Erfinder: BEISEL, Michael, 55444 Schöneberg (DE)
(86) Internationale Anmeldenummer: PCT/EP2014/000412
(87) Internationale Veröffentlichungsnummer: WO 2014/139627

(56) Entgegenhaltungen:
- DE-C- 877 257
- DE-U1- 29 620 323
- US-A- 4 844 481
- US-A- 6 035 872
- US-A1- 2005 046 114

## Beschreibung

Die Erfindung betrifft einen Mediendrehverteiler für insbesondere Gefäßfüllmaschinen, mit einem stationären Element mit darin befindlicher Durchführung für ein abzufüllendes Medium, beispielsweise einer feststehenden Welle, und mit einem demgegenüber rotierenden Element, beispielsweise einem drehbaren Verteilerkopf, wobei zwischen dem stationären Element und dem rotierenden Element wenigstens eine Dichtung angeordnet ist.

Gefäßfüllmaschinen und insbesondere Getränkeabfüllmaschinen sind entweder als Geradläufer oder als die in der Getränkeabfüllung meistens eingesetzten Rundläufer-Modelle ausgebildet. Vorliegend geht es um Rundläufer-Modelle und entsprechend ausgelegte Gefäßfüllmaschinen, die aufgrund ihrer kontinuierlichen Arbeitsweise deutlich höhere Ausbringungen pro Stunde als Geradläufer aufweisen. Der Grundaufbau und die Funktionsweise solcher Gefäßfüllmaschinen wird beispielhaft in der DE 43 26 346 A1 der Anmelderin beschrieben.

Solche Gefäßfüllmaschinen und insbesondere Getränkeabfüllmaschinen sind regelmäßig mit Mediendrehverteilern des eingangs beschriebenen Aufbaus ausgerüstet. Tatsächlich verfügt hierzu die Gefäßfüllmaschine über einen Rotor mit einer Vielzahl von Füllelementen an seinem Umfang, der mit dem drehbaren bzw. rotierenden Element des Mediendrehverteilers verbunden ist. Mit Hilfe der Füllelemente werden die abzufüllenden Gefäße an jeweiligen Füllstationen mit dem gewünschten Medium gefüllt.

Dazu kann der Drehverteiler unmittelbar auf dem fraglichen Rotor befestigt sein und verfügt im Stand der Technik nach der DE 296 20 323 U1 über einen rotationssymmetrischen Mantel. Auf diesem Mantel ist das mit einer entsprechenden rotationssymmetrischen Bohrung ausgerüstete stationäre Element mittels Wälzlagern drehbar gelagert. Am Umfang des stationären Elementes finden sich Zuleitungen für das abzufüllende Medium und auch unter anderem für Reinigungsflüssigkeit. Mit Hilfe der Reinigungsflüssigkeit wird eine sogenannte "CIP-Reinigung" durchgeführt, also eine "Reinigung am Ort" (Cleaning in Place), die ohne Demontage von Anlagen oder Anlagenteilen vorgenommen wird. Dabei werden alle produktberührten Anlagenteile über einen genau geplanten Kreislauf mit verschiedenen Reinigungsmedien beaufschlagt.

Beim Stand der Technik nach der DE 296 20 323 U1 sind zwischen den einzelnen zuvor angesprochenen Zuleitungen sowie einer unteren Stirnseite des stationären Elements in Bohrungen mehrere Ringnuten ausgebildet, die jeweils eine Dichtung aufnehmen. Auf diese Weise werden die den bekannten Mediendrehverteiler durchströmenden Medien respektive Fluide voneinander getrennt und erfährt der Mediendrehverteiler auch eine Abdichtung nach außen hin. Zu diesem Zweck ist jede Dichtung mit mindestens zwei elastischen Dichtringen ausgerüstet, die mit Abstand in einem gemeinsamen Gehäuse befestigt sind. Zwischen den Dichtringen wird eine durchgehende Ringkammer gebildet. Jede Ringkammer ist mit einem Einlass und um ca. 180° versetzt mit einem Auslass für Reinigungsflüssigkeit ausgerüstet.
Bei der Reinigung der bekannten Gefäßfüllmaschine bzw. des zugehörigen Mediendrehverteilers ist der Einlass der oberen Ringkammer mit einer Zuleitung für die Reinigungsflüssigkeit verbunden und werden im Übrigen die jeweiligen Ringkammern der einzelnen Dichtungen strömungsmäßig hintereinander geschaltet. Der Auslass der untersten Ringkammer mündet ins Freie. Auf diese Weise werden die Zuleitungen und Ableitungen des Drehverteilers in geschlossenem Kreislauf von der Reinigungsflüssigkeit durchflossen und auch die Ringkammern.
Dadurch können sich die Dichtringe der Dichtungen nach außen hin öffnen und werden hierbei eventuell Schmutzteilchen zwischen den Dichtringen und dem Mantel des rotierenden Elements herausgespült. Dadurch soll eine vollständige und wirkungsvolle Säuberung des bekannten Mediendrehverteilers in allen Bereichen stattfinden. Dieser kann folglich für einen sterilen Betrieb der Gefäßfüllmaschine eingesetzt werden. Eine Gefäßfüllmaschine oder allgemein Verpackungsanlage wird als steril bzw. steril arbeitend dann bezeichnet, wenn im Produkt - vorliegend dem abzufüllenden Medium respektive Getränk - keine vermehrungsfähigen Keime vorhanden sind. Demgegenüber ist mit dem Ausdruck "aseptisch" regelmäßig die absolute Abwesenheit von Mikroorganismen und Sporen verbunden. Jedenfalls spielen für solche Verpackungsanlagen und insbesondere die hier in Rede stehenden Gefäßfüllmaschinen Reinigungsverfahren eine besondere Bedeutung.
Dabei hat sich in der Praxis herausgestellt, dass die die Dichtungen jeweils aufnehmenden Ringnuten bei dem Drehverteiler nach der DE 296 20 323 U1 oder vergleichbar aufgebauten Mediendrehverteilern zwangsläufig Spalte aufweisen, die von der Reinigungsflüssigkeit nicht oder nicht vollständig erreicht werden. Dadurch lässt sich eine komplette Reinigung nicht gewährleisten. Das ist insbesondere dann von Nachteil, wenn ein aseptischer Betrieb gewünscht wird und in diesem Zusammenhang Kontaminationen des abzufüllenden Mediums durch beispielsweise Reinigungsflüssigkeit, nicht entfernte Schmutzpartikel etc. unter allen Umständen vermieden werden müssen.

Die US 4,844,481 offenbart einen Drehverteiler gemäß dem Oberbegriff des Anspruchs 1 mit einer Dichtung, die mit Überdruck beaufschlagbar ist.

Der weitere Stand der Technik nach der DE 20 2006 000 325 U1 schlägt in diesem Zusammenhang einen Mediendrehverteiler vor, bei welchem das stationäre Element und das rotierende Element axial gegeneinander abgedichtet sind. Dadurch ist es möglich, die beiden Teile in axialer Richtung voneinander wegzubewegen, so dass hierdurch die Dichtungen zum Auswechseln einfach zugänglich sind. Die zuvor beschriebenen Probleme einer nicht vollständigen Reinigungswirkung werden jedoch durch zwangsläufig und unverändert vorgesehene Spalte nicht gelöst. Hier will die Erfindung insgesamt Abhilfe schaffen.
Der Erfindung liegt das technische Problem zugrunde, einen derartigen Mediendrehverteiler so weiter zu entwickeln, dass eine rückstandslose Reinigung möglich ist und sich dieser folglich insbesondere für aseptische Anwendungen eignet.
Zur Lösung dieser technischen Problemstellung ist ein gattungsgemäßer Mediendrehverteiler für insbesondere Gefäßfüllmaschinen im Rahmen der Erfindung gemäß Anspruch 1 ausgebildet und unter anderem dadurch gekennzeichnet, dass die wenigstens eine Dichtung mit Druck (mit Überdruck/Unterdruck) beaufschlagbar ausgebildet ist und hierdurch wahlweise einen Spalt zwischen dem stationären und dem rotierenden Element verschließt oder öffnet.

Dabei wird im Allgemeinen so vorgegangen, dass die Dichtung den fraglichen Spalt bei Normaldruck bereits verschließt. Wird die Dichtung zusätzlich mit einem Überdruck beaufschlagt, so kann die Dichtwirkung verbessert werden. Umgekehrt führt die Beaufschlagung der Dichtung mit einem Unterdruck, also einem geringeren Druck als Normaldruck, dazu, dass der Spalt geöffnet wird, weil die mit dem Unterdruck beaufschlagte Dichtung auf diese Weise aus dem Spalt zurückgezogen wird.
Generell ist natürlich auch eine umgekehrte Vorgehensweise denkbar und wird von der Erfindung erfasst. Das heißt, in diesem Fall mag erneut die Beaufschlagung der Dichtung mit Normaldruck dazu korrespondieren, dass der Spalt zwischen dem stationären Element und dem rotierenden Element verschlossen wird. In diesem Fall sorgt dann eine Beaufschlagung der Dichtung mit Unterdruck dafür, dass die Dichtwirkung verbessert wird. Die Beaufschlagung der Dichtung mit Überdruck führt demgegenüber dazu, dass die Dichtung aus dem Spalt zurückgezogen wird. - Im Regelfall wird jedoch so vorgegangen, wie dies die erste Variante beschreibt, das heißt, dass die Dichtwirkung mit anliegendem Überdruck verbessert wird und sich die Dichtung bei anliegendem Unterdruck aus dem Spalt gleichsam zurückzieht.
In diesem Zusammenhang ist die Dichtung im Allgemeinen im stationären Element angeordnet. Auf diese Weise können etwaige Verbindungsleitungen bzw. Zuleitungen von der Dichtung zu einer entsprechend ausgelegten Druckquelle ebenfalls stationär bzw. ortsfest ausgelegt werden. Dabei hat es sich bewährt, wenn die Dichtung insgesamt in einer geteilten Dichtungskammer bzw. einem entsprechend ausgelegten Einbauraum angeordnet ist. Dadurch wird regelmäßig der Einbau erleichtert.
Im Übrigen begünstigt eine solche Auslegung die weitere Option, wonach der Dichtung ein Tragkörper zugeordnet ist. Dieser Tragkörper ist seinerseits mit einer Zuleitung zur Kommunikation mit der bereits angesprochenen Druckquelle ausgerüstet. Erfindungsgemäß handelt es sich bei dieser Druckquelle um eine kombinierte Überdruck-/Unterdruckquelle oder es ist eine getrennte Auslegung von einerseits einer Überdruckquelle und andererseits einer Unterdruckquelle vorgesehen.

Jedenfalls begünstigt die geteilte Dichtungskammer den Einbau und die Anbringung des Tragkörpers, weil der Tragkörper zu diesem Zweck lediglich zwischen zwei Teile des stationären Elementes in diesem Bereich eingebaut zu werden braucht. Das heißt, die beiden Teile werden vorteilhaft durch den Tragkörper miteinander verbunden.

Zu diesem Zweck ist der Tragkörper meistens wenigstens zweiteilig ausgelegt. Tatsächlich verfügt der Tragkörper üblicherweise über einen Grundkörper und einen Dichtungskörper. Der Grundkörper ist meistens im stationären Element festgelegt bzw. verbindet die beiden zuvor angesprochenen Teile des stationären Elementes. Demgegenüber wird die Dichtung von dem Dichtungskörper als weiteren Bestandteil des Tragkörpers getragen.

Zu diesem Zweck mag die Dichtung den Dichtungskörper umschließen, und zwar regelmäßig vollständig. Dazu verfügt die Dichtung vorteilhaft über zwei sich gegenüberliegende Anschlagschultern, die eine jeweilige Hinterschneidung des Dichtungskörpers hintergreifen. Dadurch kann die Dichtung vorteilhaft als Hohldichtung ausgebildet werden. Bei Normaldruck oder auch bei einer Beaufschlagung der Dichtung bzw. Hohldichtung mit einem Überdruck definiert die Dichtung in ihrem Innern einen Hohlraum. Der Hohlraum kommuniziert mit der Druckquelle.

Auf diese Weise wird eine kopfseitige Dichtfläche der Dichtung mit einer oder mehreren Dichtlippen vom Dichtungskörper bzw. dem Kopf des Dichtungskörpers abgehoben respektive beabstandet. Die Ausbildung des Hohlraumes geht damit einher, dass der Spalt zwischen dem feststehenden bzw. stationären Element und dem rotierenden Element verschlossen wird. In dieser Funktionsstellung kragt die Dichtung bzw. Hohldichtung gegenüber der Dichtungskammer hervor und liegt im Allgemeinen mit ihrem einen oder mit ihren beiden Dichtlippen am rotierenden Element an. Der Spalt zwischen dem rotierenden Element und dem stationären Element ist verschlossen.

Im Regelfall verfügt die kopfseitige Dichtfläche der Dichtung über zwei voneinander beabstandete Dichtlippen. Zwischen den Dichtlippen ist die fragliche Dichtfläche im allgemeinen konvex nach innen gewölbt. Dadurch wird die Dichtwirkung zwischen der aus der Dichtungskammer im stationären Element vorkragenden Dichtung und dem rotierenden Element im Spalt zwischen dem stationären Element und dem rotierenden Element praktisch ausschließlich durch Anlage der Dichtlippen am rotierenden Element zur Verfügung gestellt. Gegenüber dieser Situation bei einer Beaufschlagung der Dichtung mit Normaldruck führt eine Beaufschlagung mit Überdruck dazu, dass die typischerweise konvex nach innen gewölbte Dichtfläche zwischen den beiden Dichtlippen nach außen gedrückt wird und sich zusätzlich zu den Dichtlippen an das rotierende Element anlegt. Auf diese Weise wird die Dichtwirkung bei anliegendem Überdruck verbessert.

Der Dichtungskörper als die Dichtung haltender Bestandteil der Tragkörpers ist frontseitig mit einer Dichtfläche ausgerüstet. Diese frontseitige Dichtfläche am Dichtungskörper korrespondiert mit der kopfseitigen Dichtfläche der Dichtung, welche sich im Wesentlichen zwischen den beiden Dichtlippen und seitlich hiervon erstreckt. Beide Dichtflächen, das heißt einerseits die Dichtfläche frontseitig des Dichtungskörpers und andererseits die Dichtfläche kopfseitig der Dichtung sind korrespondierend ausgelegt, das heißt aneinander angepasst, und zwar von ihrer jeweiligen Kontur her.

Auf diese Weise führt eine Beaufschlagung der Dichtung bzw. Hohldichtung mit Unterdruck dazu, dass die kopfseitige Dichtfläche der Dichtung frontseitig an den Dichtungskörper angelegt wird und sich hier an die korrespondierend ausgebildete Dichtfläche des Dichtungskörpers anschmiegt. Dadurch wird zugleich die Zuleitung im Tragkörper verschlossen und verschwindet der von der Hohldichtung bei anliegendem Normaldruck bzw. Überdruck beschriebene Hohlraum zwischen der frontseitigen Dichtfläche des Dichtungskörpers und der kopfseitigen Dichtfläche der Dichtung. Zumindest wird der Hohlraum deutlich verkleinert. Hiermit einher geht der Umstand, dass sich die Dichtung bzw. Hohldichtung von ihrer zuvor eingenommenen vorkragenden Position gegenüber der Dichtungskammer in eine demgegenüber zurückgezogene Stellung bewegt.

Der Übergang von der vorkragenden Stellung der Dichtung mit im Innern ausgebildeten Hohlraum zu ihrer zurückgezogenen Position ohne Hohlraum bzw. mit einem Hohlraum deutlich verringerter Größe korrespondiert ausschließlich zu einer Verformung der kopfseitigen Dichtfläche der Dichtung. Das heißt, die bereits angesprochenen Anlageschultern der Dichtung ebenso wie seitliche Flanken der Dichtung werden bei diesem Vorgang nicht verformt. Das erreicht die Erfindung im Kern dadurch, dass die fraglichen Anlageschultern und auch die besagten beiden sich gegenüberliegenden Flanken letztlich zwischen einerseits dem Tragkörper und andererseits dem stationären Element bzw. dessen beiden Teilen festgeklemmt respektive eingespannt werden.
Auf diese Weise können in diesem Bereich keine Spalte entstehen, die zu etwaigen Kontaminationen im abzufüllenden Medium führen. Vielmehr trifft die typischerweise bei zurückgezogener Dichtung und folglich einer Beaufschlagung der Dichtung mit Unterdruck den Spalt spülende Reinigungsflüssigkeit auf einen glattflächigen Übergang vom stationären Element jeweils zur Dichtung. Die Reinigungsflüssigkeit und selbstverständlich auch das abzufüllende Medium kann folglich nicht in den Spalt zwischen dem Tragkörper und dem stationären Element eindringen, weil dieser Spalt von den jeweiligen Flanken der Dichtung verschlossen wird. Dadurch ist eine einwandfreie Reinigung des Spaltes zwischen dem stationären Element und dem rotierenden Element möglich, und zwar ohne Rückstände in nicht vorhandenen Toträumen.
Tatsächlich wird bei einer solchen Reinigung meistens so vorgegangen, dass hierzu zunächst der Spalt zwischen dem stationären und dem rotierenden Element geöffnet wird, indem die Dichtung mit einem Unterdruck beaufschlagt wird. Dadurch zieht sich die Dichtung aus dem Spalt zurück. Wie bereits erläutert, legt sich bei diesem Vorgang die kopfseitige Dichtfläche der Dichtung an die entsprechend geformte frontseitige Dichtfläche des Tragkörpers bzw. des Dichtungskörpers an. Jetzt kann der Spalt gereinigt und gegebenenfalls danach oder abschließend mit sterilem Wasser gespült werden. Nach oder auch während dieses abschließenden Spülvorganges mit sterilem Wasser kann die Dichtung entlastet werden, wird also mit Normaldruck oder auch Überdruck beaufschlagt. Als Folge hiervon legt sich die Dichtung erneut an das rotierende Element an.

Auf diese Weise fungiert das im Spalt noch vorhandene sterile Wasser im Beispielfall am Ende des Reinigungsvorganges als gleichsam Schmiermittel für die beiden am rotierenden Element anliegenden Dichtlippen. Da bei diesem Vorgang etwaige Spalte verschlossen sind bzw. prinzipbedingt erst gar nicht entstehen, gelingt eine vollständige und totraumfreie Reinigung. Dadurch ist der erfindungsgemäße Mediendrehverteiler insbesondere für aseptische Anwendungen geeignet. Hierin sind die wesentlichen Vorteile zu sehen.

Ganz allgemein ist ein entsprechendes Verfahren zum Reinigen von mindestens zwei durch eine Dichtung begrenzten oder getrennten Räumen geeignet, die ein stationäres Element und mit einem demgegenüber rotierenden Element oder Bauteil aufweisen, zwischen welchen wenigstens eine Dichtung angeordnet ist. Dabei ist mindestens einer der Räume medienführend oder mit einem in der Regel flüssigem Medium gefüllt oder füllbar. Die Dichtung kann wahlweise einen Spalt zwischen dem stationären Element und dem rotierenden Element oder Bauteil verschließen oder öffnen. Hierzu wird ein innerer Hohlraum des Dichtungselementes oder ein Hohlraum zwischen zwei benachbarten oder sich gegenüberliegenden Dichtungselementen mit Druck oder einem Unterdruck (Vakuum) beaufschlagt. Dies bewirkt, dass der abdichtende Abschnitt der Dichtung, der auf einer gegenüberliegenden Elementwand auf- oder anliegt (Dichtfläche), mindestens teilweise von dieser Dichtfläche abgehoben werden kann.

Somit ist es möglich, dass mindestens teilweise der abdichtende Anteil der Dichtung von der Dichtfläche abhebt und einen Spalt frei gibt, oder durch Absenken des Anpressdrucks, ein reinigendes oder sterilisierendes flüssiges oder gasförmiges Fluid sich einen derartigen Spalt schaffen kann und quer zur Dichtung über die Dichtfläche strömen kann. Somit wird ein reinigendes oder sterilisierendes Fluid vom ersten Raum über den Dichtspalt direkt in den zweiten Raum geleitet. Diese Dichtung und das Verfahren wird idealerweise zum CIP-Reinigen von Innenund Hohlräumen sowie Leitungswegen von Behälterbehandlungsmaschinen eingesetzt, insbesondere von Füllermaschinen, Behälterformvorrichtungen oder aseptische Behandlungsmaschinen für Gefäße, wie beispielsweise Flaschen, Dosen etc.. Das flüssige Medium in einem der Räume ist dabei in der Regel ein Getränk oder Nahrungsmittel. Idealerweise wird das Dichtsystem und das Reinigungsverfahren bei Mediendrehverteilern und der darin befindlichen Durchführung vorgesehen.

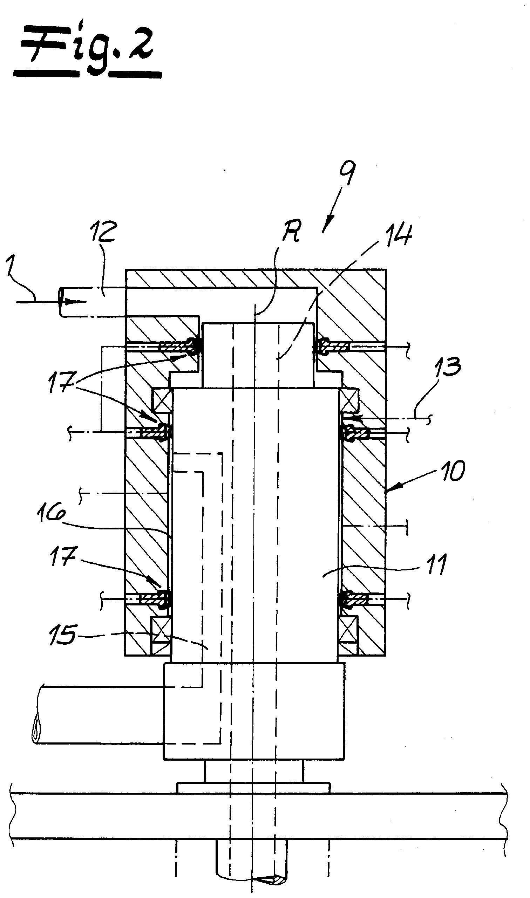

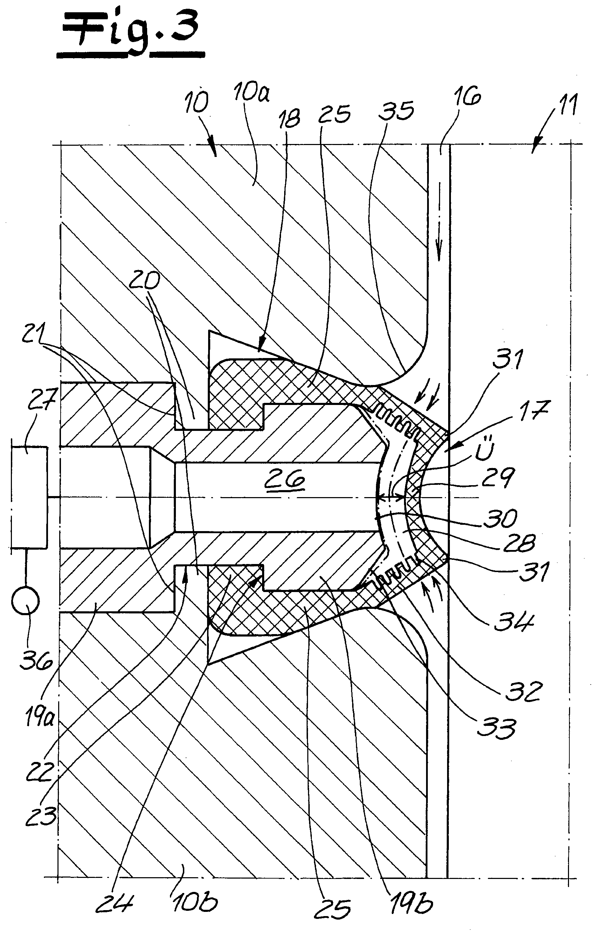

Somit ist Gegenstand der Erfindung auch ein Verfahren zum Reinigen von durch eine Dichtung begrenzten oder getrennten Räumen, bei welchem die Dichtung wahlweise einen Spalt zwischen dem stationären Element und dem rotierenden Element verschließt und hierzu mit entsprechendem Druck wie beschrieben beaufschlagt wird.
Im Folgenden wird die Erfindung anhand einer lediglich ein Ausführungsbeispiel darstellenden Zeichnung näher erläutert; es zeigen:
- **Fig. 1**: eine Gefäßfüllmaschine in schematischer Übersicht,
- **Fig. 2**: den erfindungsgemäßen Mediendrehverteiler in einem schematischen Längsschnitt und
- **Fig. 3**: einen Detailausschnitt aus Fig. 1.

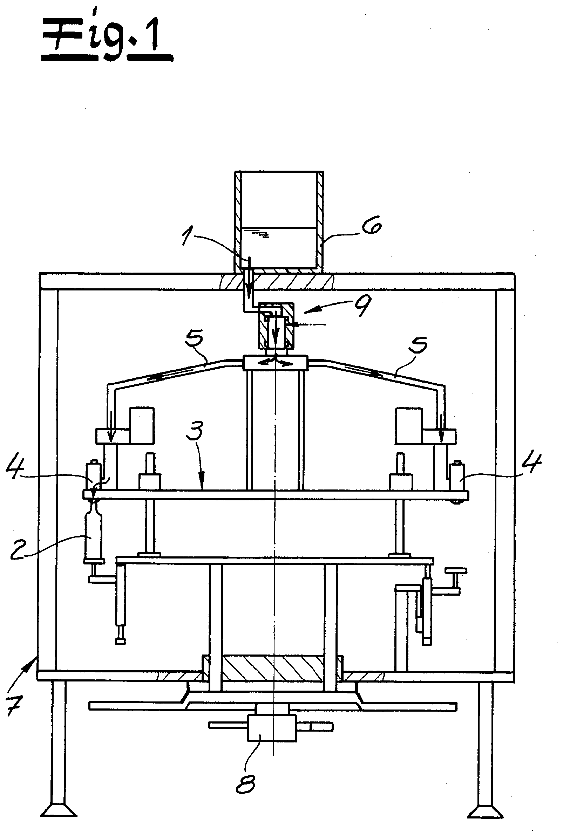

In der Fig. 1 ist eine Füllvorrichtung, nach dem Ausführungsbeispiel eine Gefäßfüllmaschine und insbesondere eine Getränkeabfüllmaschine dargestellt. Mit Hilfe der Füllvorrichtung kann ein flüssiges Medium 1 steril und insbesondere aseptisch in Gefäße 2, vorliegend Flaschen 2, abgefüllt werden. Zu diesem Zweck ist die schematisch in der Fig. 1 dargestellte Füllvorrichtung zunächst einmal mit einem Rotor 3 ausgerüstet, welcher eine Vielzahl von Füllelementen 4 an seinem Umfang aufweist.
Die Füllelemente 4 stehen über Produktleitungen 5 mit einem das abzufüllende Medium 1 aufnehmenden Tank 6 in Verbindung. Zum weiteren grundsätzlichen Aufbau gehören ein Gestell 7 sowie ein Antrieb 8 für den Rotor 3. Schließlich ist noch ein Drehverteiler bzw. Mediendrehverteiler 9 realisiert, der im Detail Gegenstand der weiteren Fig. 2 und 3 ist. Der Drehverteiler bzw. Mediendrehverteiler 9 setzt sich im Wesentlichen aus einem stationären Element 10 und einem rotierenden Element 11 zusammen.

Im Ausführungsbeispiel ist das stationäre Element 10 als feststehende Welle 10 zur drehbaren Aufnahme und Lagerung des als drehbarer Verteilerkopf 11 ausgelegten rotierenden Elementes 11 ausgeführt. Der Verteilerkopf bzw. das rotierende Element 11 mag unter Zwischenschaltung von nicht explizit gezeigten Lagern auf der Welle bzw. dem stationären Element 10 gelagert sein. Schließlich ist das stationäre Element 10 noch mit einer Durchführung 12 ausgerüstet, durch welche das abzufüllende Medium 1 bzw. das Getränk 1 vom Tank 6 über die Produktzuleitungen 5 schließlich zu den einzelnen Füllelementen 4 gelangt.

In der Fig. 2 ist der Drehverteiler bzw. Mediendrehverteiler 9 mit seinem stationären Element bzw. der Welle 10 und dem rotierenden Element respektive seinem Verteilerkopf 11 dargestellt. Man erkennt, dass das stationäre Element 10 eine rotationssymmetrische Bohrung im Vergleich zu einer Rotationsachse R aufweist, innerhalb derer das mit einem entsprechenden rotationssymmetrischen Mantel ausgerüstete drehbare Element 11 bzw. der Verteilerkopf 11 aufgenommen wird. Am Umfang des stationären Elementes 10 sind mehrere Zuleitungen 12, 13 vorgesehen. Über die Zuleitung 12 wird das Produkt einem Kanal 14 zugeführt, welcher überwiegend in Längsrichtung des rotierenden Elementes 11 verläuft. Die Zuleitung 13 dient dazu, Reinigungsflüssigkeit zuzuführen, welche ebenfalls über einen größtenteils in Längsrichtung des rotierenden Elementes 11 verlaufenden Kanal 15 weitergeführt wird. Außer den beschriebenen Zuleitungen 12, 13 können selbstverständlich noch weitere Zuleitungen vorgesehen sein.

Um einen Spalt 16 zwischen dem rotierenden Element bzw. Verteilerkopf 11 und dem stationären Element respektive der Welle 10 abzudichten, sind vorliegend mehrere Dichtungen 17 vorgesehen, die im Detail Gegenstand der Fig. 3 sind. Die fraglichen Dichtungen 17 sind zwischen dem stationären Element bzw. der Welle 10 und dem rotierenden Element respektive dem Verteilerkopf 11 angeordnet und sorgen dafür, dass der hier vorhandene Spalt 16 abgedichtet wird. Tatsächlich sind die Dichtungen 17 zwischen den Zuleitungen 12, 13 und an der unteren Stirnseite des stationären Elementes 10 vorgesehen und sorgen dafür, dass die den dargestellten Mediendrehverteiler 9 durchströmenden Fluide voneinander getrennt werden und der Drehverteiler bzw. Mediendrehverteiler 9 insgesamt nach außen hin abgedichtet ist.

Im Ausführungsbeispiel ist die jeweilige Dichtung 17 ausweislich der Fig. 3 in einer Dichtungskammer 18 angeordnet. Die Dichtungskammer 18 ist geteilt ausgelegt. Außerdem findet sich die Dichtungskammer 18 und folglich auch die Dichtung 17 im stationären Teil respektive der Welle 10. Tatsächlich ist der stationäre Teil 10 des Mediendrehverteilers 9 ausweislich der Fig. 3 geteilt ausgelegt und setzt sich aus einem Teil 10a und einem Teil 10b zusammen, die sich jeweils oberhalb und unterhalb der Dichtungskammer 18 erstrecken.

Die beiden Teile 10a, 10b des stationären Elementes 10 nehmen zwischen sich einen Tragkörper 19a, 19b auf. Der Tragkörper 19a, 19b ist zweiteilig ausgelegt und setzt sich aus einem Grundkörper 19a und einem Dichtungskörper 19b zusammen. Der Grundkörper 19a ist im stationären Teil 10 verankert. Dazu verfügen die beiden Teile 10a und 10b des stationären Teils 10 jeweils über Anlagestege 20, die eine Schulter 21 am Tragkörper 19a, 19b bzw. dessen Grundkörper 19a übergreifen.

Der Tragkörper 19a, 19b ist ebenso wie das stationäre Element 10 insgesamt rotationssymmetrisch im Vergleich zu der gemeinsamen Rotationsachse R ausgelegt. Gleiches gilt für die Dichtung 17. Das heißt, bei dem Tragkörper 19a, 19b handelt es sich letztendlich um einen Tragring und die Dichtung 17 ist insgesamt als Ringdichtung ausgelegt.

Die Anlagestege 20 an den beiden Teilen 10a und 10b des stationären Elementes 10 greifen in eine Nut 22 des Tragkörpers 19a, 19b ein, welche den bereits angesprochenen und beschriebenen Grundkörper 19a mit dem Dichtungskörper 19b verbindet. Tatsächlich trägt der Dichtungskörper 19b die Dichtung 17, bei welcher es sich im Ausführungsbeispiel um eine Hohldichtung 17 handelt. Dabei umschließt die Dichtung 17 den Dichtungskörper 19b und hintergreift dazu mit Anlageschultern 23 eine jeweilige Hinterschneidung 24 des Dichtungskörpers 19b.

Die Anlageschultern 23 der Dichtung 17 füllen in Verbindung mit den Anlagestegen 20 der beiden Teile 10a, 10b des stationären Elementes 10 die Nut 22 im Tragkörper 19a, 19b vollständig oder nahezu vollständig aus. Dadurch erfährt die Dichtung 17 einen einwandfreien Halt in Axialrichtung auf dem Tragkörper 19a, 19b. Im Übrigen werden sich jeweils an die Anlageschultern 23 der Dichtung 17 anschließende Flanken 25 der Dichtung 17 zwischen dem Dichtungskörper 19b des Tragkörpers 19a, 19b und dem jeweiligen Teil 10a, 10b des stationären Elementes 10 festgeklemmt. Dadurch wird der Spalt zwischen dem jeweiligen Teil 10a, 10b und dem die Dichtung 17 haltenden Tragkörper 19a, 19b dicht verschlossen.

Anhand der Fig. 3 erkennt man, dass der Tragkörper 19a, 19b eine Zuleitung 26 aufweist, die vorliegend den Tragkörper 19a, 19b zentral durchsetzt. Da es sich bei dem Tragkörper 19a, 19b topologisch um einen Tragring handelt, arbeitet man meistens mit mehreren über den Umfang des fraglichen Tragringes verteilt angeordneten Zuleitungen 26, die jeweils insgesamt zur Kommunikation mit einer Druckquelle 27 ausgelegt sind. Das heißt, mit Hilfe dieser Druckquelle 27 kann in der jeweiligen Zuleitung 26 ein Überdruck/Unterdruck im Vergleich zum am Aufstellungsort der Gefäßfüllmaschine respektive des Mediendrehverteilers 9 herrschenden Normaldruck erzeugt werden.

Auf diese Weise ist die Dichtung 17 erfindungsgemäß mit Druck beaufschlagbar ausgebildet. Dadurch kann die Dichtung 17 den vergrößert in der Fig. 3 dargestellten Spalt 16 zwischen dem feststehenden Element 10 und dem rotierenden Element 11 wahlweise verschließen oder öffnen. Da die Dichtung 17 als Hohldichtung 17 ausgelegt ist, beobachtet man je nach ihrer Funktionsstellung einen mehr oder minder ausgeprägten Hohlraum 28, welcher zwischen einer kopfseitigen Dichtabschnitt 29 der Dichtung 17 einerseits und einer frontseitig des Dichtungskörpers 19b vorgesehenen Dichtfläche 30 andererseits ausgebildet wird.

Die kopfseitige Dichtabschnitt 29 der Dichtung 17 ist mit beidseitigen Dichtlippen 31 ausgerüstet. Zwischen den beiden Dichtlippen 31 ist die kopfseitige Dichtabschnitt 29 der Dichtung 17 nach dem Ausführungsbeispiel nach innen gewölbt, insbesondere konvex nach innen gewölbt. Das gilt zumindest für den Fall, dass die Dichtung bzw. Hohldichtung 17 mit Normaldruck beaufschlagt wird. In diesem Fall sorgen primär die Dichtlippen 31 für die erforderliche Abdichtung des Spaltes 16 zwischen dem feststehenden Element 10 und dem rotierenden Element 11.

Sofern ausgehend von dieser Funktionsstellung mit Hilfe der Druckquelle 27 ein Überdruck in der Zuleitung 26 und folglich auch in dem Hohlraum 28 der Dichtung 17 erzeugt wird, wird die kopfseitige Dichtabschnitt 29 der Dichtung 17 nach außen gewölbt. Bei diesem Vorgang kann sich die gesamte Dichtabschnitt 29 zwischen den beiden Dichtlippen 31 an das rotierende Element 11 anlegen, wird jedenfalls regelmäßig die Dichtwirkung verbessert.

Wird dagegen die Zuleitung 26 im Tragkörper 19a, 19b mit einem Unterdruck beaufschlagt, so zieht sich die Dichtung 17 aus dem Spalt 16 zurück. Bei einer Beaufschlagung der Dichtung 17 mit Normaldruck oder Überdruck kragt die Dichtung respektive Hohldichtung 17 gegenüber ihrer Dichtungskammer 18 vor, wie dies durchgezogen in der Fig. 3 dargestellt ist. Wird dagegen die Zuleitung 26 mit einem Unterdruck beaufschlagt, so zieht sich die Dichtung 17 in die Dichtungskammer 18 zurück und wird der zuvor verschlossene Spalt 16 geöffnet. Das deutet eine strichpunktierte Darstellung an.

Zugleich sorgt die Beaufschlagung der Zuleitung 26 mit Unterdruck seitens der Druckquelle 27 dafür, dass sich die Dichtflächen 29 einerseits der Dichtung 17 und andererseits die Dichtfläche 30 frontseitig des Dichtungskörpers 19b aneinander anlegen. Zu diesem Zweck sind die beiden Dichtflächen 29, 30 jeweils korrespondierend bzw. aneinander angepasst ausgelegt. Da im Ausführungsbeispiel die kopfseitige Dichtabschnitt 29 der Dichtung 17 größtenteils konvex nach innen gewölbt ist, verfügt auch die korrespondierende Dichtfläche 30 frontseitig des Dichtungskörpers 19b über eine entsprechende konvex nach innen gewölbte Gestalt.

Als Folge dieser gegenseitigen Anlage der beiden Dichtflächen 29, 30 legen sich auch Seitenbereiche 32 der kopfseitigen Dichtabschnitt 29 der Dichtung 17 an zugehörige Anlageflächen 33 der frontseitigen Dichtfläche 30 am Dichtungskörper 19b an. Die Seitenbereiche 32 der Dichtung 17 schließen sich jeweils frontseitig an die jeweils fixierten Flanken 25 an.

Da die Flanken 25 der Dichtung 17 zwischen dem Tragkörper 19a, 19b und dem jeweiligen Teil 10a, 10b des feststehenden Elementes 10 bzw. im feststehenden Element 10 fixiert sind, führt die beschriebene Druckbeaufschlagung der Dichtung 17 lediglich dazu, dass sich die Dichtabschnitt 29 mit den beiden Seitenbereichen 32 wie beschrieben verformt und auch verformen kann. Dabei legt sich die kopfseitige Dichtabschnitt 29 der Dichtung 17 an die korrespondierende Dichtfläche 30 des Tragkörpers 19a, 19b an oder wird dieser angenähert. Die Seitenbereiche 32 des Dichtabschnitts 29 jenseits der jeweiligen Dichtlippen 31 werden bei diesem Vorgang gestaucht und verfügen hierzu über angedeutete Einkerbungen 34. Aufgrund dieser Stauchung können sich die Seitenbereiche 32 bei einer Beaufschlagung der Zuleitung 26 mit einem Unterdruck letztendlich an die demgegenüber kürzeren Anlageflächen 33 der kopfseitigen Dichtfläche 30 am Tragkörper 19a, 19b ebenfalls anlegen. Dabei wird die Dichtfläche am rotierenden Element 11, die dem Dichtabschnitt 29 gegenüberliegt, im Idealfall freigegeben.

Bei dem beschriebenen Vorgang definiert die Dichtung 17 je nach innenseitiger Beaufschlagung der Hohlkammer 28 mit einem Überdruck oder Unterdruck einen frontseitigen Überstand Ü gegenüber dem Dichtungskörper 19b bzw. dem Tragkörper 19a, 19b insgesamt. Dann ist der Spalt 16 geschlossen und die Dichtung 17 kragt gegenüber ihrer Dichtungskammer 18 vor sowie liegt wenigstens mit ihren Dichtlippen 31 am rotierenden Element 11 an. Das gilt im Großen und Ganzen für den Fall, dass die Dichtung 17 mit Normaldruck respektive Überdruck beaufschlagt wird.

Herrscht dagegen in der Zuleitung 26 ein Unterdruck, so verschwindet der Hohlraum 28 bzw. reduziert sich auf ein Minimum. Denn die Dichtabschnitt 29 der Dichtung 17 legt sich an die Dichtfläche 30 des Tragkörpers 19a, 19b an. Zugleich kommen die Seitenbereiche 32 in Kontakt mit den Anlageflächen 33. Die Dichtung 17 geht von ihrer vorkragenden Position gegenüber der Dichtungskammer 18 mit dem Überstand Ü in eine demgegenüber zurückgezogene Stellung über, bei welcher der Überstand Ü nicht mehr beobachtet wird. Jetzt ist der Spalt 16 geöffnet und kann beispielsweise mit Reinigungsflüssigkeit gespült werden, die über die Zuleitung 13 in den Spalt 16 zugeführt wird.

Nachdem die Reinigungsflüssigkeit den Spalt 16 gereinigt hat, wird regelmäßig steriles Wasser durch den Spalt 16 geführt, um etwaige Reste der Reinigungsflüssigkeit zu entfernen. Im Anschluss daran sorgt die Druckquelle 27 dafür, dass die Dichtung 17 mit einem Normaldruck und/oder Überdruck beaufschlagt wird. Als Folge hiervon legen sich die Dichtlippen 31 an das rotierende Element 11 an, wobei etwaiges noch im Spalt 16 verbleibendes steriles Wasser als gleichsam Schmiermittel für die beiden Dichtlippen 31 fungiert.

Da die beiden Teile 10a, 10b des stationären Elementes 10 am äußeren Rand der Dichtungskammer 18 mit einer jeweiligen Abrundung 35 ausgerüstet sind und im Übrigen die Dichtung 17 bzw. ihre beiden Flanken 25 den Spalt zwischen dem Tragkörper 19a, 19b und dem jeweiligen Teil 10a, 10b des stationären Teils 10 verschließen, wird eine insgesamt einwandfreie Reinigung beobachtet, welche den beschriebenen Mediendrehverteiler 9 für aseptische Anwendungen prädestiniert. Denn der Spalt 16 ist nicht mit etwaigen Zerklüftungen oder Toträumen ausgerüstet, sondern finden sich vielmehr überwiegend glatte Oberflächen. Auf diese Weise gelingt eine vollständige und totraumfreie Reinigung, welche den Mediendrehverteiler 9 für die beschriebenen aseptischen Anwendungen ertüchtigt.

Die Druckquelle 27 kann darüber hinaus mit einem Druckmesser 36 ausgerüstet sein, welcher auch in die Druckquelle 27 integrierbar ist. Mit Hilfe des Druckmesser 36 lässt sich feststellen, ob beispielsweise Undichtigkeiten insbesondere in der Hohlkammer 28 und folglich der Dichtung 17 vorliegen. Dazu werden beispielsweise Messwerte für den jeweils anliegenden Überdruck/ Unterdruck in einer zugehörigen Steuereinheit abgelegt und mit vorherigen Messwerten oder Sollwerten verglichen. Treten signifikante Abweichungen auf, so ist dies ein Indiz dafür, dass Undichtigkeiten beobachtet werden, die beispielsweise auf eine poröse Dichtung 17 rückschließen lassen.

Auf diese Weise kann die Dichtung 17 automatisch auf ihre Funktionsfähigkeit hin überprüft werden, und zwar ohne dass der Mediendrehverteiler 9 zerlegt wird. Es findet also eine gleichsam automatische und immer wieder kehrende Prüfung der Dichtung 17 auf Funktionsfähigkeit statt. Das ist insbesondere vor dem Hintergrund notwendig und besonders vorteilhaft, als die Dichtung 17 bekanntermaßen die jeweils über den Mediendrehverteiler 9 zu führenden Medien gegeneinander abdichtet und sich durch damit verbundenen Druck von außen gegebenenfalls verformt, wie dies entsprechende Pfeile in der Fig. 3 andeuten. Etwaige mit diesem Druck verbundene Beschädigungen lassen sich nun mit Hilfe des Druckmessers 36 erfassen und identifizieren.

Nichtdargestellt ist eine alternative Ausführungsform, bei welcher die Dichtung 17 aus zwei Einzeldichtungen besteht so dass zwischen den beiden Flanken 31 kein vergleichbares, verbindendes Dichtelement 29 angeordnet ist. Dabei kann eines oder beide Dichtelemente 17 bzw. deren freien Enden in analoger Weise an einen oder mehrere Dichtflächen eines Tragkörper 19 angenähert oder angelegt werden.

## Patentansprüche

1. Mediendrehverteiler (9) für insbesondere Gefäßfüllmaschinen, mit einem stationären Element (10) mit darin befindlicher Durchführung (12) für ein abzufüllendes Medium (1), und mit einem demgegenüber rotierenden Element (11), wobei zwischen dem stationären Element (10) und dem rotierenden Element (11) wenigstens eine Dichtung (17) angeordnet ist, wobei der Dichtung (17) ein Tragkörper (19a, 19b) zugeordnet ist, welcher mit einer Zuleitung (26) zur Kommunikation mit einer Druckquelle (27) ausgerüstet ist, **dadurch gekennzeichnet, dass** es sich bei der Druckquelle um eine kombinierte Überdruck-/Unterdruckquelle handelt oder eine getrennte Auslegung von einerseits einer Überdruckquelle und andererseits einer Unterdruckquelle vorgesehen ist, so dass die Dichtung (17) mit Druck oder Unterdruck beaufschlagbar ausgebildet ist und hierdurch wahlweise ein Spalt (16) zwischen dem stationären Element (10) und dem rotierenden Element (11) verschlossen oder geöffnet werden kann, wobei die Dichtung (17) als Hohldichtung (17) mit einem Hohlraum (28) ausgebildet ist, welcher mit der Druckquelle (27) kommuniziert, so dass ein mehr oder minder ausgeprägter Hohlraum (28) zwischen einem kopfseitigen Dichtabschnitt (29) der Dichtung (17) einerseits und einer frontseitig eines Dichtungskörpers (19b) vorgesehenen Dichtfläche (30) andererseits ausbildbar ist.

2. Mediendrehverteiler (9) nach Anspruch 1, **dadurch gekennzeichnet, dass** die Dichtung (17) in einer geteilten Dichtungskammer (18) sowie vorzugsweise im stationären Element (10) angeordnet ist.

3. Mediendrehverteüer (9) nach Anspruch 1 oder 2, **dadurch gekennzeichnet, dass** der Tragkörper (19a, 19b) wenigstens zweiteilig mit einem vorzugsweise im stationären Element (10) festgelegten Grundkörper (19a) und einem die Dichtung (17) tragenden Dichtungskörper (19b) ausgebildet ist.

4. Mediendrehverteiler (9) nach einem der Ansprüche 1 bis 3, **dadurch gekennzeichnet, dass** die Dichtung (17) den Dichtungskörper (19b) umschließt und dazu mit Anlageschultern (23) eine jeweilige Hinterschneidung (24) des Dichtungskörpers (19b) hintergreift.

5. Mediendrehverteiler (9) nach Anspruch 3 oder 4, **dadurch gekennzeichnet, dass** der Dichtungskörper (19b) frontseitig und die Dichtung (17) kopfseitig mit korrespondierenden Dichtflächen (29, 30) ausgerüstet sind.

6. Mediendrehverteiler (9) nach einem der Ansprüche 1 bis 5, **dadurch gekennzeichnet, dass** die Dichtung (17) je nach innenseitiger Beaufschlagung mit dem Druck einen frontseitigen Überstand (0) gegenüber dem stationären Element (10) definiert und an dem rotierenden Element (11) oder unter Bildung des axial durchgängigen Spaltes (16) am Tragkörper (19a, 19b) angelegt werden kann.

7. Verfahren zum Reinigen von mindestens zwei durch eine Dichtung begrenzten oder getrennten Räumen, mit einem stationären Element (10) und mit einem demgegenüber rotierenden Element (11), wobei zwischen dem stationären Element (10) und dem rotierenden Element (11) wenigstens eine Dichtung (17) angeordnet ist, und in mindestens einem der beiden Räume ein Medium (1) eingefüllt ist oder durch diesen Raum gefördert wird, **dadurch gekennzeichnet, dass**
- die Dichtung (17) wahlweise einen Spalt (16) zwischen dem stationären Element (10) und dem rotierenden Element (11) verschließt oder öffnet und hierzu ein innerer Hohlraum des Dichtungselementes oder ein Hohlraum zwischen zwei benachbarten oder sich gegenüberliegenden Dichtungselementen mit Druck oder einem Unterdruck beaufschlagt wird, wodurch
- mindestens teilweise ein abdichtender Abschnitt des Dichtungselementes von der Dichtfläche abgehoben oder der Anpressdruck stark herabgesetzt wird, und wobei nach dem mindestens teilweisen Abheben des abdichtenden Anteils der Dichtung oder Absenken des Anpressdrucks auf den abdichtenden Anteil der Dichtung, ein reinigendes oder sterilisierendes flüssiges oder gasförmiges Fluid von dem ersten Raum, der durch die Dichtung von dem zweiten Raum begrenzt oder getrennt war, in diesen zweiten Raum geleitet wird, indem dieses Fluid durch den Spalt geleitet wird, der durch das Abheben gebildet wurde, oder indem das Fluid mindestens den abdichtenden und unter geringem oder keinem Druck stehenden Anteil des mindestens einen Dichtungselementes verformt und so unterströmt.

8. Verfahren nach Anspruch 7, **dadurch gekennzeichnet, dass** die Räume Leitungswege und Hohlräume von Behälterbehandlungsmaschinen sind, insbesondere von Füllermaschinen, Behälterformvorrichtungen oder aseptischen Behandlungsmaschinen für Gefäße (2), beispielsweise für Flaschen (2), Dosen etc., wobei die Behälterbehandlungsmaschine einen Mediendrehverteiler (9), mit darin befindlicher Durchführung (12) für ein abzufüllendes Medium (1), beispielsweise ein Getränk, aufweist.

## Claims

1. Rotary media distributor (9), in particular for container filling machines, with a stationary element (10) with a passage (12) located therein for a medium (1) to be introduced, and with an element (11) rotating relative to the stationary element, wherein at least one seal (17) is disposed between the stationary element (10) and the rotating element (11), wherein allocated to the seal (17) is a carrier body (19a, 19b) which is equipped with an infeed (26) for communication with a pressure source (27), **characterised in that**
the pressure source is a combined overpressure/under-pressure source, or a separate arrangement is provided of, on the one hand, an overpressure source and, on the other, an under-pressure source, such that the seal (17) is configured such as to be subjected to pressure or under-pressure, and thereby a gap (16) between the stationary element (10) and the rotating element (11) can be optionally closed or opened, wherein the seal (17) is configured as a hollow seal (17) with a cavity (28), which communicates with the pressure source (27), such that a more or less significant cavity (28) can be formed between a head-side seal section (29) of the seal (17), on the one hand, and, on the other hand, a sealing surface (30) provided on the front side of a sealing body (19b).

2. Rotary media distributor (9) according to claim 1, **characterised in that** the seal (17) is arranged in a divided sealing chamber (18) as well as, preferably, in the stationary element (10).

3. Rotary media distributor (9) according to claim 1 or 2, **characterised in that** the carrier body (19a, 19b) is configured as at least of two parts, with a basic body (19a), preferably secured in the stationary element (10), and a sealing body (19b) carrying the seal (17).

4. Rotary media distributor (9) according to one of claims 1 to 3, **characterised in that** the seal (17) encompasses the sealing body (19b), and for this purpose engages with contact shoulders (23) behind a respective undercut (24) of the sealing body (19b) in each case.

5. Rotary media distributor (9) according to claim 3 or 4, **characterised in that** the sealing body (19b) is equipped on the front side, and the seal (17) on the head side, with corresponding sealing surfaces (29, 30).

6. Rotary media distributor (9) according to any one of claims 1 to 5, **characterised in that**, depending on the inside imposition of pressure, the seal (17) defines a front-side projection (Ü) in relation to the stationary element (10), and can be brought into contact at the rotating element (11) or, with the formation of the axial gap (16), at the carrier body (19a, 19b).

7. Method for the cleaning of at least two spaces, delimited or separated by a seal, with a stationary element (10) and an element (11) rotating in relation to the stationary element, wherein at least one seal (17) is disposed between the stationary element (10) and the rotating element (11), and a medium (1) is filled into at least one of the two spaces, or is conveyed through this space,
**characterised in that**
- the seal (17) optionally closes or opens a gap (16) between the stationary element (10) and the rotating element (11), and, for this purpose, an inner cavity of the sealing element or a cavity between two adjacent or opposed sealing elements is subjected to pressure or an under-pressure, wherein
a sealing section of the sealing element is at least partially raised from the sealing surface or the contact pressure is substantially reduced, and wherein, after the at least partial raising of the sealing portion of the seal or the reduction of the contact pressure onto the sealing portion of the seal, a cleaning or sterilising liquid or gaseous fluid is conveyed from the first chamber, which was delimited or separated from the second chamber by the seal, into this second chamber, **in that** this fluid is conveyed through the gap which was formed by the lifting, or **in that** the fluid deforms at least the sealing portion of the at least one sealing element, which is under slight or no pressure, and therefore flows beneath it.

8. Method according to claim 7, **characterised in that** the spaces are conveying paths and cavities of container treatment machines, in particular of filling machines, container shaping devices, or aseptic treatment machines for containers (2), for example for bottles (2), cans, etc., wherein the container treatment machine comprises a rotary media distributor (9), with a passage (12) therein for a medium (1) which is to be introduced, such as a beverage.

## Revendications

1. Distributeur rotatif de milieux (9) pour en particulier des machines de remplissage de récipients, comprenant un élément stationnaire (10) pourvu d'un passage (12) se trouvant dans ce dernier pour un milieu (1) à transvaser, et un élément en rotation (11) en vis-à-vis, dans lequel qu'au moins un joint d'étanchéité (17) est disposé entre l'élément stationnaire (10) et l'élément en rotation (11), dans lequel est associé au joint d'étanchéité (17) un corps porteur (19a, 19b), qui est équipé d'une conduite d'arrivée (26) destinée à établir une communication avec une source de pression (27), **caractérisé en ce**
**que** la source de pression est une source de surpression/dépression combinée, ou
en ce qu'est prévue une configuration séparée d'une part d'une source de surpression et d'autre part d'une source de dépression de sorte que le joint d'étanchéité (17) est réalisé de manière à pouvoir être soumis à l'action d'une pression ou d'une dépression et qu'à cet effet au choix une fente (16) entre l'élément stationnaire (10) et l'élément en rotation (11) peut être fermée ou ouverte, dans lequel
le joint d'étanchéité (17) est réalisé sous la forme d'un joint d'étanchéité creux (17) pourvu d'une cavité (28), qui communique avec la source de pression (27) de telle sorte qu'une cavité (28) davantage ou moins marquée peut être réalisée entre un segment étanche (29) situé côté tête du joint d'étanchéité (17) d'une part et une surface étanche (30) prévue côté frontal d'un corps d'étanchéité (19b) d'autre part.

2. Distributeur rotatif de milieux (9) selon la revendication 1, **caractérisé en ce que** le joint d'étanchéité (17) est disposé dans une chambre d'étanchéité (18) divisée ainsi que de préférence dans l'élément stationnaire (10).

3. Distributeur rotatif de milieux (9) selon la revendication 1 ou 2, **caractérisé en ce que** le corps porteur (19a, 19b) est réalisé au moins en deux parties avec un corps de base (19a) fixé de préférence dans l'élément stationnaire (10) et avec un corps d'étanchéité (19b) portant le joint d'étanchéité (17).

4. Distributeur rotatif de milieux (9) selon l'une quelconque des revendications 1 à 3, **caractérisé en ce que** le joint d'étanchéité (17) entoure le corps d'étanchéité (19b), et **en ce qu'**en plus une contredépouille (24) respective du corps d'étanchéité (19b) vient en prise par l'arrière avec des épaulements d'appui (23).

5. Distributeur rotatif de milieux (9) selon la revendication 3 ou 4, **caractérisé en ce que** le corps d'étanchéité (19b) sur le côté frontal et le joint d'étanchéité (17) côté tête sont équipés de surfaces étanches (29, 30) correspondantes.

6. Distributeur rotatif de milieux (9) selon l'une quelconque des revendications 1 à 5, **caractérisé en ce que** le joint d'étanchéité (17) définit respectivement, après avoir été soumis côté intérieur à l'action de la pression, un débord (Ü) situé côté frontal par rapport à l'élément stationnaire (10) et peut être appliqué contre l'élément en rotation (11) ou contre le corps porteur (19a, 19b) en formant la fente (16) continue axialement.

7. Procédé servant à nettoyer au moins deux espaces délimités ou séparés par un joint d'étanchéité avec un élément stationnaire (10) et avec un élément en rotation (11) en vis-à-vis, dans lequel au moins un joint d'étanchéité (17) est disposé entre l'élément stationnaire (10) et l'élément en rotation (11) et un milieu (1) est introduit dans au moins un des deux espaces ou est refoulé à travers ledit espace,
**caractérisé en ce**
- **que** le joint d'étanchéité (17) ferme ou ouvre au choix une fente (16) entre l'élément stationnaire (10) et l'élément en rotation (11) et qu'à cet effet une cavité intérieure de l'élément d'étanchéité ou une cavité entre deux éléments d'étanchéité adjacents ou se faisant face est soumise à l'action d'une pression ou d'une dépression,
ce qui permet
- de soulever de la surface étanche au moins en partie un segment d'étanchéification de l'élément d'étanchéité ou de réduire fortement la pression de compression et dans lequel une fois la portion d'étanchéification du joint d'étanchéité au moins en partie soulevée ou une fois la pression de compression abaissée sur la portion d'étanchéification du joint d'étanchéité, un fluide liquide ou gazeux de nettoyage ou de stérilisation est acheminé du premier espace, qui est délimité ou séparé par le joint d'étanchéité du deuxième espace, dans ledit deuxième espace par le fait que ledit fluide est acheminé à travers la fente, qui a été formée par le soulèvement, ou par le fait que ledit fluide déforme au moins la portion d'étanchéification, qui se trouve sous une pression modérée ou qui n'est pas sous pression, de l'au moins un élément d'étanchéité ou circule ainsi sous cette dernière.

8. Procédé selon la revendication 7, **caractérisé en ce que** les espaces sont des voies d'acheminement et des cavités de machines de traitement de contenants, en particulier des remplisseuses, des dispositifs de moulage de contenants ou des machines de traitement aseptique pour des récipients (2), par exemple pour des bouteilles (2), des boîtes, etc., dans lequel la machine de traitement de contenants présente un distributeur rotatif de milieux (9) pourvu d'un passage (12) se trouvant dans ce dernier pour un milieu (1) à transvaser, par exemple pour une boisson.
